# EUROPEAN PATENT APPLICATION

(11) **EP 2 728 715 A2**
(43) Date of publication of application: **07.05.2014**
(21) Application number: 13164643.2
(22) Date of filing: 22.04.2013
(51) Int. Cl.: H02K 5/10, H02K 9/06

(54) **Rotating electrical machine**

(30) Priority: 06.11.2012 JP 2012244893
(71) Applicant: Kabushiki Kaisha Yaskawa Denki, Kitakyushu-shi, Fukuoka 806-0004 (JP)
(72) Inventor: Miyazaki, Daisuke, Kitakyushu-shi Fukuoka 806-0004 (JP); Yamagishi, Toshiyuki, Kitakyushu-shi Fukuoka 806-0004 (JP)
(74) Representative: Viering, Jentschura & Partner Patent- und Rechtsanwälte

(57) **Abstract**

A rotating electrical machine (1) includes an armature coil (6) and a permanent magnet (9) that are arranged facing each other via a magnetic air gap. The rotating electrical machine comprises an output shaft (8) that is coupled to the permanent magnet (9) and is rotatably arranged by at least one bearing (7); and a rotation cover (10) that is coupled to the output shaft (8) and functions as a rotation fan. The rotation cover (10) includes a circular flat plate portion (10a) configured to cover an end portion of the armature coil (6) in an axial direction, and a plurality of blade portions (10b) that is provided on the armature coil (6) side of the circular flat plate portion (10a) so as to protrude towards the armature coil (6).

## Description

### TECHINICAL FIELD

An embodiment disclosed relates to rotating electrical machines.

### BACKGROUND ART

In JP, U, 05-04751, a so-called direct drive type electric motor that directly drives a load without using a reduction device, is disclosed. In this electric motor of prior art, a doughnut plate-shaped seal plate is put as a lid on an upper portion of a space where a motor stator and a motor rotor are housed. The outer circumferential side of the seal plate is fixed to a housing external cylinder in the form of a cantilever. A seal lip on the inner circumferential edge of the seal plate is slidingly in contact with the outer circumferential surface of an output shaft to seal a motor housing space.

### DISCLOSURE OF THE INVENTION

### Problem to be solved by the Invention

In the prior art described above, the motor housing space is sealed with the seal plate for protecting the motor stator. Furthermore, an air layer free from convection is formed between the motor stator and the seal plate. Consequently, heat dissipation is disadvantageously degraded.

An object of the present disclosure is to provide a rotating electrical machine that can enhance heat dissipation while protecting a stator.

### Means for Solving the Problem

In order to achieve the above-described object, according to one aspect of the disclosure, there is provided a rotating electrical machine comprising a stator and a rotor that are arranged facing each other via a magnetic air gap. The rotating electrical machine comprises an output shaft that is coupled to the rotor and is rotatably arranged by at least one bearing, and a fan that is coupled to the output shaft. The fan includes a disc portion configured to cover an end portion of the stator in an axial direction, and a plurality of blade portions that is provided on the stator side of the disc portion so as to protrude towards the stator.

### Advantages of the Invention

According to the rotating electrical machine of the present disclosure, it is possible to enhance heat dissipation while protecting a stator.

### BRIEF DESCRIPTION OF THE DRAWING

Fig. 1 is a vertical cross-sectional view showing an overall configuration of a rotating electrical machine of an embodiment;
Fig. 2 is an enlarged view of a part corresponding to an A portion of Fig. 1 in a comparative example;
Fig. 3 is a partially cutaway perspective view showing a rotation cover of an embodiment;
Fig. 4 is an enlarged view of the A portion of Fig. 1;
Fig. 5 is a perspective view showing the entire appearance of a rotation cover of a variation in which the forms of a protrusion portion and embossing process are different;
Fig. 6 is an enlarged view of the part corresponding to the A portion of Fig. 1 in the variation shown in Fig. 5;
Fig. 7 is an enlarged view of the part corresponding to the A portion of Fig. 1 in a variation in which protrusion portions having a labyrinth structure are provided in a radial direction;
Fig. 8 is an enlarged view of the part corresponding to the A portion of Fig. 1 in a variation in which protrusion portions having a labyrinth structure are provided in an axial direction; and
Fig. 9 is an enlarged view of a B portion of Fig. 8 when a labyrinth structure is also provided on a housing side.

### BEST MODE FOR CARRYING OUT THE INVENTION

An embodiment will be described below with reference to accompanying drawings.

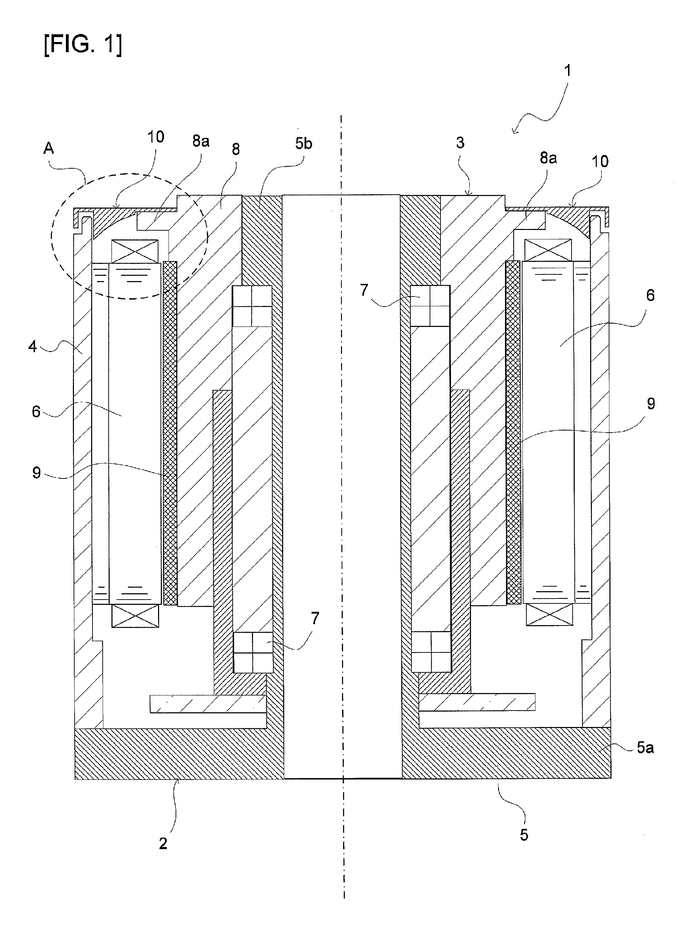

The configuration of a rotating electrical machine 1 according to the present embodiment will first be described with reference to Fig. 1. As shown in Fig. 1, the rotating electrical machine 1 includes a fixed portion 2 and a rotating portion 3. In other words, the rotating electrical machine 1 is an inner rotor type direct drive motor (hereinafter referred to as a DD motor) that includes the rotating portion 3 and the fixed portion 2 inside.

The fixed portion 2 includes a housing 4, a bottom surface bracket 5, an armature coil 6 and two thrust bearings 7. The housing 4 is substantially cylindrical as a whole, and houses therein most components included in the rotating electrical machine 1. A radial direction in the cylindrical shape of the housing 4 is hereinafter referred simply to as a "radial direction"; an axial direction in the cylindrical shape of the housing 4 is hereinafter referred simply to as an "axial direction." The bottom surface bracket 5 integrally includes a bottom surface portion 5a having a disc shape and a fixed shaft 5b. The bottom surface portion 5a has an external diameter equal to that of the housing 4. The fixed shaft 5b is formed in the shape of a hollow tube which protrudes into the center of the bottom surface portion 5a. The fixed shaft 5b penetrates the center portion of the housing 4. The bottom surface portion 5a is fixed to block one opening portion (in a lower portion of the figure) of the housing 4. A plurality of armature coils 6 is provided so as to be aligned in a circumferential direction on the inner circumferential surface of the housing 4. The armature coil 6 corresponds to a stator that is recited in each claim.

The rotating portion 3 includes an output shaft 8, a permanent magnet 9 and a rotation cover 10. The output shaft 8, as a whole, is formed substantially in the shape of a hollow tube. A flange 8a is formed on an end portion on one side (the upper side of the figure) of the output shaft 8. With the flange 8a located in an open end side (the upper side of the figure) of the above-described housing 4, the output shaft 8 fits to the outer circumferential surface of the fixed shaft 5b. The output shaft 8 is also supported to the fixed shaft 5b through the two thrust bearings 7 (bearings). With the arrangement, with the position in the above-described axial direction constrained, the output shaft 8 is rotatably supported around an axis along an up/down direction of the figure. A plurality of permanent magnets 9 is provided so as to be aligned in the circumferential direction on the outer circumferential surface of the output shaft 8. The permanent magnets 9 are arranged so as to face the above-described armature coil 6 in the above-described radial direction through a magnetic air gap. The rotation cover 10 is a disc member that is substantially doughnut-shaped (circular) as a whole. The rotation cover 10 is attached with an unillustrated bolt or the like to the flange 8a of the above-described output shaft 8 and thus is arranged to cover the opening portion in the open end side of the housing 4. The permanent magnet 9 corresponds to a rotor that is recited in each claim.

In the rotating electrical machine 1 configured as described above, an alternating magnetic field is generated in the circumferential direction within the housing 4 by the supply of power having the same predetermined frequency to each of the armature coils 6. Then, the permanent magnets 9 of the fixed portion 2 receive an attracting force and a repulsive force caused by the alternating magnetic field to generate a torque on the output shaft 8 and thus the entire rotating portion 3 is rotated. The order of change of the predetermined frequency between the armature coils 6 is switched, and thus it is possible to switch the normal rotation and reverse rotation of the output shaft 8.

The rotating electrical machine 1 configured as described above functions as a DD motor that drives by directly coupling a load machine (a load target: not shown in particular) to the output shaft 8 without intervention of a reduction device. Consequently, a gap (or a slidable contact portion) between the body of the rotating electrical machine 1 on the side of the fixed portion 2 and the output shaft 8 is more likely to be exposed to the atmosphere. Thus, as the application of the DD motor has been diversified in recent years, a dustproof function for preventing the entry of dust and dirt into the housing 4 through the gap described above is required.

As a general dustproof configuration, as described above, other than the configuration in which the opening portion of the housing 4 is covered with the rotation cover 10, there is a configuration in which the oil seal of an elastic member provided in the fixed portion 2 is brought into slidable contact with the output shaft 8 (not shown in particular). The oil seal is advantageous only in terms of the dustproof function. However, the oil seal is disadvantages in the following respects. That is, when the oil seal is used, a loss of torque of the rotating electrical machine 1 is caused by the friction. Moreover, when the oil seal is used, the rated number of revolutions of the rotating electrical machine 1 itself needs to be set lower so as to suppress the abrasion and heat generation of a seal member. Moreover, when the oil seal is used, maintenance such as the periodical exchange of the seal member and the replenishment of a lubricant is needed. Hence, when priority is given to the performance of and the convenience of use of the rotating electrical machine 1, as in the present embodiment, the dustproof configuration using the rotation cover 10 is often applied.

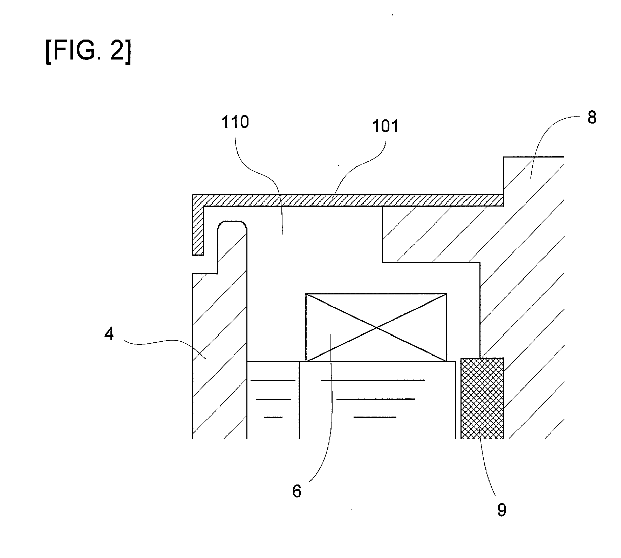

The simplest configuration of a rotation cover is only a circular flat plate. Furthermore, in the configuration of a comparative example shown in Fig. 2, an edge portion of the outer circumference of a circular flat plate is bent and faces the outer circumference of the opening of the housing 4 in the above-described radial direction through a predetermined gap without any contact. However, in the configuration of the comparative example, the internal space of the housing 4 is sealed with a rotation cover 101. Since, an air layer 110 free from convection is formed between the rotation cover 101 and the armature coil 6 serving as a heat source, heat dissipation is disadvantageously low.

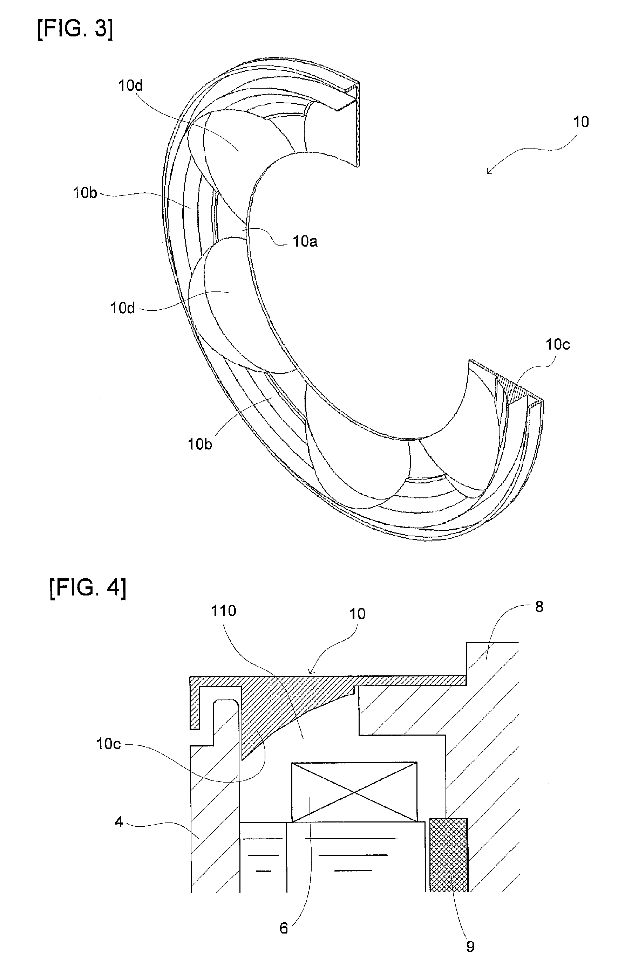

By contrast, in the present embodiment, the rotation cover 10 configured as shown in Figs. 3 and 4 is provided, and thus the heat dissipation problem described above is solved. In other words, in the rotation cover 10 shown in Fig. 3, a plurality of blade portions 10b is provided on the inner surface side (the flat surface on the left front side in Fig. 3) of the circular flat plate portion (corresponding to disc portion) 10a. As a result, the rotation cover 10 as a whole is configured as a rotation fan. Specifically, as shown in Fig. 4, a substantially semicircular embossing process is performed in six positions to be processed and spaced evenly in a circumferential direction on a reversely tapered protrusion portion 10c whose thickness in the above-described axial direction is continuously increased from the inner side to the outer side in the above-described radial direction, and thus the embossing process portions 10d are formed. With these embossing process portions 10d, the six blade portions 10b are formed while separated from each other.

Since the arc portion of a substantially semicircular embossing process portion 10d faces the outer side of the rotation cover 10 in the above-described radial direction. Consequently, the width of each of the blade portions 10b in the circumferential direction is increased from the inner side to the outer side in the above-described radial direction. Then, in the outermost side, the six blade portions 10b are circularly and integrally connected over the entire circumferential direction. The outer circumferential surface (the end surface on the side of the housing 4) of the circularly connected portion described above faces the inner circumferential surface of the housing 4 through a minute air gap in the above-described radial direction. Moreover, each of the blade portions 10b is formed symmetrically with respect to the rotation direction (that is, in the shape of rotational symmetry.)

According to the embodiment described above, the following effects are obtained. That is, the rotating electrical machine 1 of the present embodiment includes the rotation cover 10 that functions as a rotation fan. The rotation cover 10 includes the circular flat plate portion 10a that covers the end portion of the armature coil 6 in the above-described axial direction, and with the arrangement, it is possible to protect the armature coil 6 from external foreign matters (such as water, dust and earth and sand). The rotation cover 10 also includes a plurality of blade portions 10b that is provided to protrude toward the side of the armature coil 6 of the circular flat plate portion 10a. The blade portions 10b are rotated together with the circular flat plate portion 10a when the output shaft 8 is rotated, and generate forced convection in the circumferential direction in the air layer 110 between the armature coil 6 and the rotation cover 10. As a result, it is possible to increase a heat-transfer coefficient between the armature coil 6 and the air layer 110, and thus it is possible to increase the dissipation of heat generated in the armature coil 6.

In addition, in the rotating electrical machine 1 of the present embodiment, that the rotation cover 10 and the housing 4 are not in contact has the following significance. In other words, for example, a structure in which the circular flat plate portion 10a of the rotation cover 10 is in contact with the housing 4 is considered to be adopted so that the hermeticity of a space housing the armature coil 6 and the permanent magnet 9. However, in this case, such contact causes an increase in frictional torque to reduce the motor characteristic. Furthermore, since such contact causes the abrasion of the rotation cover 10, it is necessary to perform periodical maintenance. On the other hand, in the present embodiment, in particular, since the rotation cover 10 is not in contact with the housing 4, the motor characteristic is prevented from being reduced, and thus it is possible to avoid maintenance.

Moreover, in the present embodiment, in particular, the end faces of a plurality of blade portions 10b on the side of the housing 4 are connected over the entire circumferential direction, and the connected end surfaces face the housing 4 through the minute air gap. With the arrangement, it is possible to increase the hermeticity of the internal space housing the armature coil 6 and the permanent magnet 9 and to prevent the entry of external foreign matters. Moreover, the outer circumferential edge portion of the circular flat plate portion 10a is bent or formed otherwise, and thus it is possible to form a labyrinth structure between the rotation cover 10 and the housing 4. In this case, it is possible to further enhance the hermeticity in this case.

Moreover, in the present embodiment, in particular, each of the blade portions 10b of the rotation cover 10 is formed to be rotationally symmetrical. With the arrangement, even when the rotating electrical machine 1 is driven in a normal rotation direction or a reverse rotation direction, it is possible to equally perform the cooling function by the rotation cover 10.

In a so-called direct drive type rotating electrical machine 1, since the output shaft 8 is directly fixed to the load machine, the heat of the rotating electrical machine 1 is easily transmitted to the load target. Thus, when the heat dissipation of the rotating electrical machine 1 is low, the load machine is likely to be affected by the heat. Therefore, the present embodiment is applied to the direct drive type rotating electrical machine 1, and thus it is possible to more effectively reduce the influence of the heat by the rotating electrical machine 1 to the load machine.

The disclosed embodiment is not limited to the embodiment described above; many variations are possible without departing from the spirit and the technical idea thereof. In other words, as long as a plurality of blade portions provided in the rotation cover 10 is configured such that, when the rotation cover 10 is rotated, the air layer 110 between the blade portions and the armature coil 6 can be appropriately agitated, another configuration may be adopted. Such variations will be sequentially described below.

### (1) Case where the forms of a protrusion portion and an embossing process are different

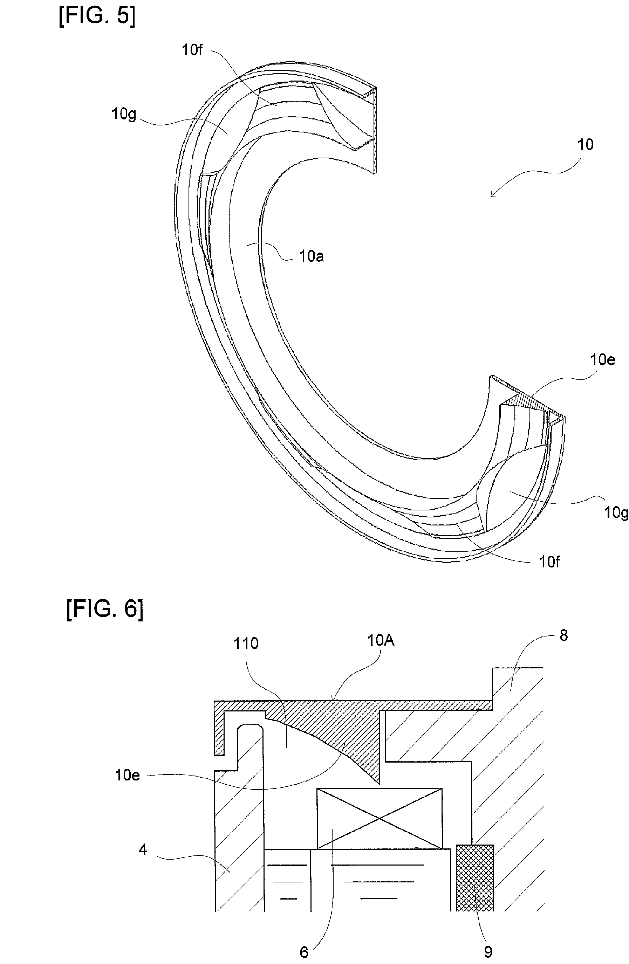

In the variations of Figs. 5 and 6, a reversely tapered protrusion portion 10e whose thickness in the above-described axial direction is continuously increased from the outer side to the inner side in the above-described radial direction is provided. A substantially semicircular embossing process is performed on six positions to be processed and spaced evenly in a circumferential direction in the protrusion portion 10e, and thus an embossing process portion 10g is formed. With these embossing process portions 10g, the six blade portions 10f are formed while separated from each other. The arc portion of the substantially semicircular embossing process portion 10g of this example faces the inner side of the rotation cover 10A in the above-described radial direction. Consequently, the width of each of the blade portions 10f in the circumferential direction is increased from the outer side to the inner side in the above-described radial direction. Then, in the innermost side, the six blade portions 10f are circularly and integrally connected over the entire circumferential direction. Each of the blade portions 10f configured as described above is also formed in a rotationally symmetrical shape. Consequently, as in the present embodiment described above, even when the rotating electrical machine 1 is driven in a normal rotation direction or a reverse rotation direction, it is possible to equally perform the cooling function by the rotation cover 10A.

### (2) Case where the rotation cover has a protrusion portion (radial direction)

In the embodiment described above, the inner circumferential surface of the opening portion of the housing 4 is close to the outer circular connection portion of the blade portions 10b of the rotation cover 10, and thus the labyrinth structure is formed between the rotation cover 10 and the housing 4, with the result that the hermeticity is enhanced. However, the present disclosure is not limited to this configuration; a protrusion portion that functions as the labyrinth structure may be provided in the outer circumferential edge portion of the rotation cover 10.

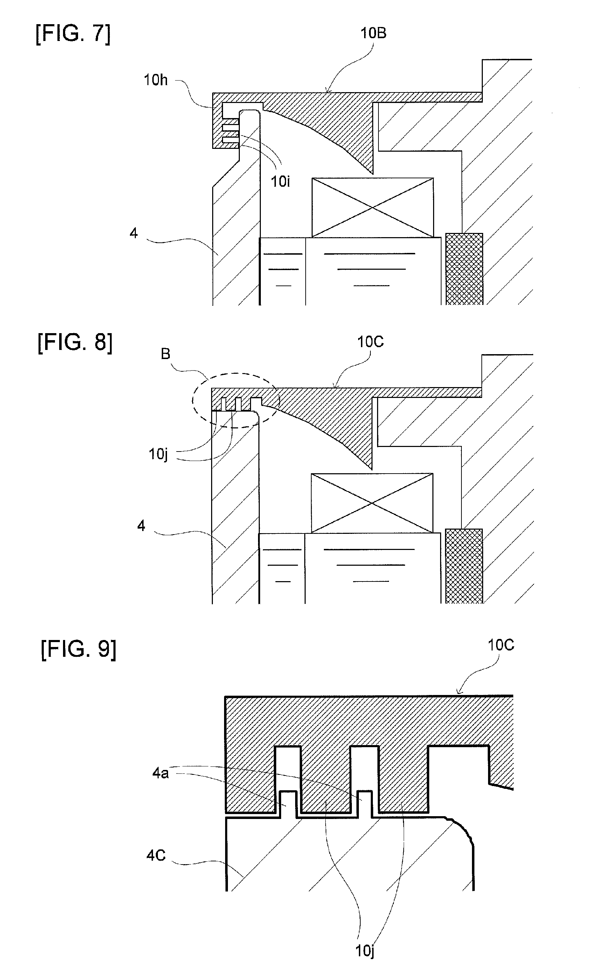

In other words, as shown in Fig. 7 corresponding to Figs. 4 and 6 described above, in this variation, a bent portion 10h is provided in the outer circumferential edge portion of a rotation cover 10B, and a plurality of protrusion portions 10i is provided in its inner circumferential surface of the bent portion 10h. These protrusion portions 10i protrude from the inner circumferential surface of the above-described bent portion 10h to the center of a rotation axis. Then, the front end portions of the protrusion portions 10i face the opening portion outer circumferential surface of the housing 4 through a minute air gap in the above-described radial direction. The individual protrusion portions 10i are each a circular flat plate whose width in the above-described radial direction is narrow (that is, a rotary member rotating around the rotation axis), and are aligned close to each other in the above-described axial direction. Spaces between these protrusion portions 10i function as minute chambers, and they prevent the entry of external air and foreign matters. Since these chambers are continuously arranged, the chambers as a whole function as the labyrinth structure that prevents the entry of foreign matters.

According to the present variation described above, the following effects are obtained. That is, in the rotating electrical machine 1 of the present variation, the circular flat plate portion 10a of the rotation cover 10B includes the protrusion portions 10i that can form the labyrinth structure between the circular flat plate portion 10a and the housing 4. With the arrangement, it is possible to enhance the hermeticity of the space housing the armature coil 6 and the permanent magnet 9 and to effectively prevent the entry of external foreign matters. Furthermore, since it is not necessary to form the labyrinth structure with the blade portions 10b, it is possible to enhance the flexibility of the shape of the blade portions 10b.

### (3) Case where the rotation cover has a protrusion portion (axial direction)

Although the protrusion portions are made to protrude in the radial direction as described above, as shown in Fig. 8, the protrusion portions may be configured to protrude in the above-described axial direction of the rotation cover 10C. In this case, a plurality of protrusion portions 10j protrudes from the outer circumferential edge portion of the circular flat plate portion 10a in the above-described axial direction. Then, the front end portions of the protrusion portions 10j face the end surface of the opening portion of the housing 4 in the above-described axial direction through a minute air gap in the above-described axial direction. The individual protrusion portions 10j are also formed in a cylindrical shape whose length in the above-described axial direction is short (that is, a rotary member rotating around the rotation axis), and are aligned close to each other in the above-described radial direction. Spaces between these protrusion portions 10j function as minute chambers, and prevent the entry of external air and foreign matters. Since these chambers are continuously arranged, the chambers as a whole function as the labyrinth structure that prevents the entry of foreign matters.

At this time, as shown in Fig. 9, in the end surface of the opening portion of the housing 4 in the above-described axial direction, a plurality of protrusion portions 4a engaging with the individual chambers on the side of the rotation cover 10 may be formed. In this case, it is possible to realize the labyrinth structure that has a higher dustproof performance. In the variations shown in Figs. 8 and 9, the same effects in the variation (2) described above are obtained.

### (4) Others

The shape and the number of blade portions 10b and 10f are not limited to the examples described above; another shape having the function of agitating air may be adopted, and another number thereof may be provided. Although the rotation covers 10, 10A, 10B and 10C described above are expected to be formed by cutting, for example, a cold-rolled steel, they may be formed of a material such as a resin.
Although, in the embodiment and each of the variations described above, the motor has been described as the rotating electrical machine, they may be applied to a generator having the same configuration.

In addition to what has been described above, the embodiment and each of the variations described above may be combined as necessary and utilized. In addition, although unillustrated, in the embodiment and the each of variations described above, various modifications are possible without departing from the spirit thereof.

## Claims

1. A rotating electrical machine (1) comprising a stator (6) and a rotor (9) that are arranged facing each other via a magnetic air gap, **characterized in that**
the rotating electrical machine (1) comprises:
an output shaft (8) that is coupled to the rotor (9) and is rotatably arranged by at least one bearing (7); and
a fan (10A; 10B; 10C) that is coupled to the output shaft (8),
the fan (10A; 10B; 10C) includes:
a disc portion (10a) configured to cover an end portion of the stator (6) in an axial direction; and
a plurality of blade portions (10b; 10f) that is provided on the stator (6) side of the disc portion (10a) so as to protrude towards the stator (6).

2. The rotating electrical machine (1) according to claim 1, further comprising a housing (4) to which the stator (6) is fixed, wherein
the fan (10A; 10B; 10C) is provided so as not to be in contact with the housing (4).

3. The rotating electrical machine (1) according to claim 2, wherein:
the plurality of blade portions (10b) are arranged so that respective end surfaces of the blade portions (10b) on a side of the housing (4) are connected to each other over an entire circumferential direction, and that the connected end surfaces face the housing (4) via a minute air gap.

4. The rotating electrical machine (1) according to claim 2 or 3, wherein:
the disc portion (10a) includes a protrusion portion (10i; 10j) configured to form a labyrinth structure between the disc portion (10a) and the housing (4).

5. The rotating electrical machine (1) according to any one of claims 1 to 4, wherein:
each of the plurality of blade portions (10b; 10f) comprises a rotationally symmetric shape each other.

6. The rotating electrical machine (1) according to any one of claims 1 to 5, wherein:
the output shaft (8) is directly fixed to a load target.
